# EUROPEAN PATENT APPLICATION

(11) **EP 3 605 254 A1**
(43) Date of publication of application: **05.02.2020**
(21) Application number: 18186887.8
(22) Date of filing: 01.08.2018
(51) Int. Cl.: G05B 23/02

(54) **SYSTEM AND METHOD FOR DATA ANALYTICS AND VERIFICATION**

(71) Applicant: Siemens Aktiengesellschaft, 80333 München (DE)
(72) Inventor: Cramer, Dieter, 81543 München (DE); Fiege, Ludger, 85567 Grafing (DE); Fröhlich, Joachim, 85614 Kirchseeon (DE); Rothbauer, Stefan, 86156 Augsburg (DE); Stückjürgen, Christoph, 80807 München (DE)

(57) **Abstract**

A system (100) for verification of data processed in a technical system and method comprising at least one functional component (110) having at least one output port (150) including a lock area (200) and a release area (400), wherein the lock area (200) of the output port (150) of the functional component (110) is configured to store output data (160) of said functional component (110), wherein an evaluator component (300)is configured to process and verify the output data (160) stored in said lock area (200) by performing a test using a testing algorithm (A), wherein in case of a positive test result of the performed test the evaluator component (300) is configured to release the output data (160) to the release area (400) of the output port (150) of the functional component (110) for further processing.

## Description

The present invention generally relates to a system and method for data analytics and verification of data before further processing by another component of a technical system.

It is common knowledge that a complex technical system can be constructed out of several function components. However, overall functional goals such as safety goals of the system shall not be violated by incorrectly constructed components. Therefore, it is necessary that a system and/or software architecture translates and breaks down overall goals into specifications for the system components. Test software and human testers can verify that these conditions are met in anticipated system contexts and system states and under tolerated system inputs. In complex systems, however, the employed test software cannot cover all possible situations because of the limited feasible amount of test cases. For most systems it is technically unfeasible to test all possible situations. Consequently, there are situations where a behavior of a system component violates expected system goals.

Especially, in systems based on cloud computing technology, a large number of devices is connected to a cloud computing system via the Internet. The devices may be located in a remote facility connected to the cloud computing system. For example, the devices can comprise, or consist of, equipments, sensors, actuators, robots, and/or machinery in an industrial set-up(s). The devices can be medical devices and equipments in a healthcare unit. The devices can be home appliances or office appliances in a residential/commercial establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., key performance indicators, outliners) and alerts to operators, field engineers or owners of the devices via a graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

During the development phase established engineering techniques are applied to reduce the number of errors in components. However, this is a common and complementary approach which is not considered in the context of the present invention.

Furthermore, failure detection through redundancy is a proven design approach. Redundancy can be implemented in time (such as repeated execution) or in space (such as execution in different places, e.g. by multiple controllers). For the implementation of redundancy the design of the system has to be considerable changed either by multiple components which are integrated with additional comparators resolving the redundant outputs (solution by change of the system design) or by components which are changed internally to provide the necessary redundancy within their boundary (solution by change of the component design).

However, homogeneous redundancy, whereby one function is computed multiple times, multiplies also the runtime and/or memory consumption, and thus reduces the performance of the system. The same holds for heterogeneous redundancy. With heterogeneous redundancy, replicated function components are constructed differently. Different replicas are used to compare the results with those produced by the original function component for plausibility. Being specific to the supervised component, plausibility checks can be built into the function component, making it more robust. In either way, the implementation of redundant functions is usually a design approach targeted at specific, often safety- or business-critical functions, which naturally increases development efforts per function. There is, however, no system-level support to handle supervision and control of (potentially) erroneous components.

Furthermore, in the field of testing, there exist various conventional approaches to check outputs at system level (black box system tests) or components level (grey box integration test). Conventional test approaches (black or grey box) check system properties, but they cannot prevent an error from propagating in the system as tests monitor system behavior which has already happened. These tests can report violations of system conditions, but cannot prevent preemptively violations of predetermined conditions to happen.

Known approaches of non-intrusive system testing monitor internal states of a system under test and check the system state against predefined constraints and conditions. Such test systems rely on observation points built into system under test conditions to forward data to external test systems that check constraints against this data ex-post. Known approaches are, for example, SVITE from AvioTech (http://www.aviotech.de/testsysteme.html) and test probes from Siemens ((1) J. Frtunikj, J. Fröhlich, T. Rolfs, A. Knoll: Qualitative Evaluation of Fault Hypotheses with Non-Intrusive Fault Injection. In: 5th International Workshop on Software Certification (WoSoCer 2015), IEEE, November 2015. (2) J. Fröhlich, J. Frtunikj, S. Rothbauer, C. Stuckjurgen: Testing Safety Properties of Cyber-Physical Systems with Non-Intrusive Fault-Injection - An Industrial Caser Study. In: SAFECOMP Workshops, LNCS 9923, 2016).

All usual approaches for testing conditions on system state and behaviour monitor an execution of a system and check it against predefined constraints. In all cases, the unintended behaviour has already happened. Unintended behaviour cannot be prevented and any adverse effects in respect to the environment of a system may have already happened. Such test approaches support the development of a system, but they are of limited use for technical systems that shall independently operate for a long time in the field such as trains.

In view of the foregoing, it is thus an object of the present invention to provide techniques that assist in preventing propagation of component failures before affecting the whole system behavior.

According to a first aspect, the invention provides a system for data analytics for an integrated system comprising one or more functional components, in which a lock area of an output port is configured to store output data from at least a first functional component and an evaluator component is configured to process and verify the output data using a testing algorithm, wherein in case of a positive test result the evaluator component is configured to release the output data to a release area of the output port.

The lock area and the release area can be formed by duplicated memory areas of the output port of the functional component.

In some advantageous embodiments, the release area is configured to serve as the input port for a second functional component. This means the release area has the function to store output data from a first functional component and to release these data to a second functional component to apply further data processing.

Additionally, an input port is configured to provide input data to the first functional component of the technical system. The input data can be generated by a data generator such as a sensor.

Embodiments of the invention can be used, by way of example, for the analytics and evaluation of e.g. safety and other data in industrial plants, control of image data in the scientific and medical area, data analytics for drug development and clinical trials using medical devices in the pharmaceutical sphere, data for navigation control in the automobile field, data for image recognition in the automobile area and computer games, etc.

Preferably, each functional component is configured to generate output data based on its input data.

In some embodiments, in case of a negative test result the evaluator component is configured to lock the output data in the lock area and to remain the previous data, i.e. previously stored data, in the release area active.

Preferably, the evaluator component is configured in such a way that the output data in the lock area are only visible for the evaluator component, i.e. accessible by the evaluator component of the verification system.

In further advantageous embodiments, the evaluator component is configured to test and verify the output data for processing by further functional components.

Furthermore, the applied testing algorithm is configured to be stored at the evaluator component or in a cloud computing platform.

Preferably, several functional components are connected in an integrated network system.

In some advantageous embodiments, a foreboder component is provided for the calculation of a predicted behavior of the integrated network system and/or functional components.

Additionally, the calculation performed by the foreboder component is based on a computational data model of the integrated network system and/or the components.

In some advantageous embodiments, the release area serves as an input port for a subsequent functional component.

In other advantageous embodiments, the input data are provided by an input port to the first functional component.

According to a second aspect, the invention provides a method for predictive verification of data processed in a technical system comprising one or more functional components, in which output data from a first functional component are stored or captured in a lock area of an output port of the first functional component and are processed and verified by a testing algorithm which is executed by an evaluator component, wherein in case of a positive test result the evaluator component releases the output data to a release area of the output port.

Additionally, the invention provides, according to a third aspect, a functional component configured for a system according to a first aspect of the invention and a method according to a second aspect of the invention.

According to a fourth aspect, the invention provides a computing platform configured for use by the system according the first aspect of the invention.

The computing platform can comprise a cloud computing platform. The platform can also be implemented on a premise or run in edge/fog.

According to a fifth aspect, the invention provides a computer program product comprising executable program code configured to, when executed, perform the method according to the second aspect.

According to a sixth aspect, the invention provides a non-transient computer-readable data storage medium comprising executable program code configured to, when executed, perform the method according to the second aspect. The non-transient computer-readable data storage medium may comprise, or consist of, any type of computer memory, in particular a semiconductor memory.

According to a seventh aspect, the invention provides a data stream representing, or configured to provide, program code configured to, when executed, perform the method according to the second aspect.

Additional features, aspects and advantages of the invention or of its embodiments will become apparent on reading the detailed description in conjunction with the following figures:
- Fig. 1: provides a general overview of a system for performing data analytics and verification according to an embodiment of the first aspect of the invention;
- Fig. 2: provides a general overview of a system for performing data analytics and verification according to an embodiment of the second aspect of the invention;
- Fig. 3: provides a general overview of a system for performing data analytics and verification according to an embodiment of the third aspect of the invention;
- Fig. 4: provides a schematic flow diagram illustrating an embodiment of a method according to the state of the art;
- Fig. 5: provides a schematic flow diagram illustrating an embodiment of a method according to the second aspect of the present invention;
- Fig. 6: schematically illustrates a computer program product according to an embodiment of the fifth aspect of the invention;
- Fig. 7: schematically illustrates a non-transient computer readable data storage medium according to an embodiment of the sixth aspect of the invention.

In the following description, for purposes of explanation and not limitation, specific details are set forth in order to provide a thorough understanding of the present invention. It will be apparent to one skilled in the art that the present invention may be practiced in other implementations that depart from these specific details.

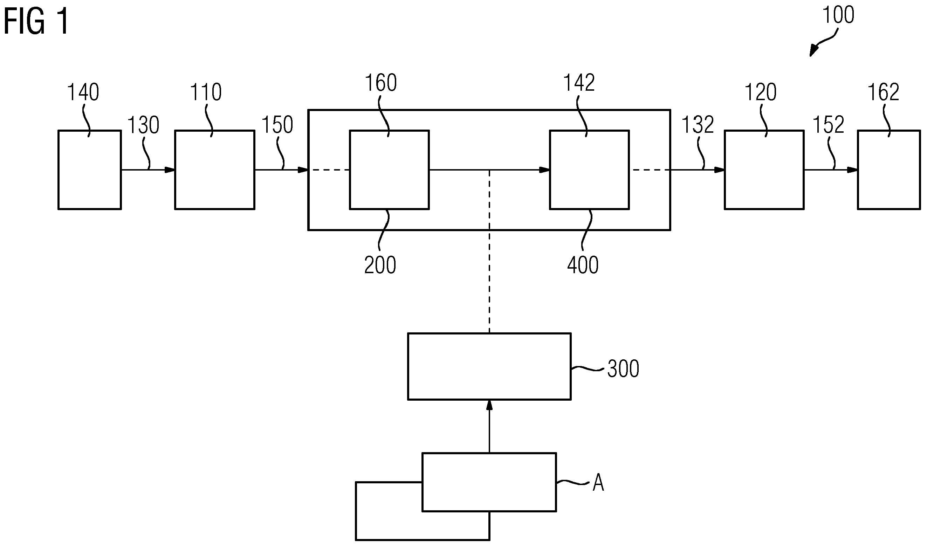

Fig. 1 provides a general overview of an integrated system having a verification system used for providing verified data according to an embodiment of the first aspect of the invention. The technical system comprises function components 110, 120 and comprises also a system 100 used to verify data before performing further processing of the data.

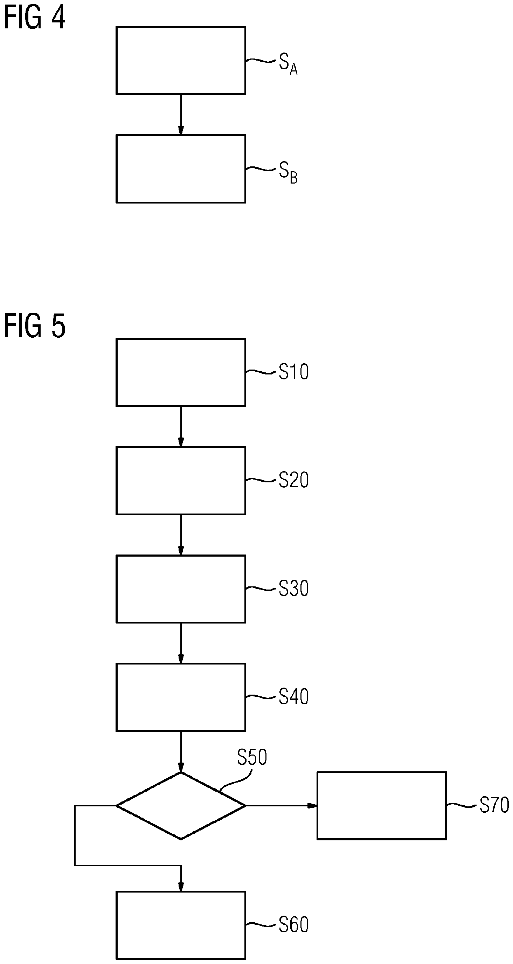

In contrast, in a conventional method, unverified data are processed. This conventional data flow comprises two main steps SA, SB as illustrated in Fig. 4.

In a first step SA, input data are provided, e.g. defined, received or stored, to a function component.

In a second step SB, output data are generated based on input data by the function component for the further processing by a subsequent function component.

A main idea of the present invention is that a system such as the system 100 of Fig. 1 is configured to provide verified data so that only verified data is further processed by the next function component. Data can be obtained by executing a function of a first function component 110 of the technical system on the basis of applied input data 140. The flow of processing verified data is based on a computation model where each function component 110, 120 has an input port 130, 132 for reading input data 140, 142 and an output port 150, 152 for writing output data 160, 162. Each function component 110, 120 of the integrated system processes output data 160, 162 from input data 140, 142. The function components 110, 120 provide output data 160, 162 at their output ports 150, 152. Subsequent function components take the data 160, 162 output by the output ports 150, 152 as input data 140, 142 at their input ports 130, 132. This computation model can easily be extended with multiple input ports 130, 132, ... (n) and multiple output ports 150, 152, ... (n) provided for each component function and of the integrated system wherein the input ports 130, 132, ... (n) are used for reading component state data 140 and output ports 150, 152, ... (n) are used for writing component state data 160. Any physically observable activity of the system 100 is driven by the data at the input ports 130, 132, ... (n) and output ports 150, 152, ... (n). The verification system 100 is embedded or integrated into the technical system comprising the function components 110, 120.

The output data 160 of a preceding function component 110 are not immediately visible for further processing by the subsequent function component 120 of the integrated technical system. This is also the case for further function components not shown in Fig. 1.

Fig. 5 shows a schematic flow diagram illustrating a method according to an embodiment of the second aspect of the present invention. The method of Fig. 5 is described partially using reference signs of Fig. 1 to Fig. 3, although the method of Fig. 5 is not restricted to the exemplary embodiments described in Fig. 1 to Fig. 3. On the other hand, the method of Fig. 5 may be executed using any of the embodiments described with respect to Fig. 1 to Fig. 3, and may accordingly, be adapted and modified according to any variations and modifications described above.

The method of processing data as illustrated in Fig. 5 comprises the following steps. In a step S10, input data 140 are provided to a function component 110. Output data 160 are generated in a step S20 from the received input data 140 by the function component 110. In a step S30, the computed output data 160 are captured in a lock area 200 of the output port 150, only visible (accessible) to an evaluator component 300 of the built-in data verification system. In a step S40, the output data 160 captured in the lock area 200 are tested by the evaluator component 300. If the test succeeds (S50), in a step S60, the output data 160 stored in the lock area 200 of the output port 150 is released to the release area 400 of the output port 150 by the evaluator component 300 of the data verification system. If the test of the evaluator component 300 fails (S50), in a step S70, the previous data 142 are remained active in the release area 400 of the output port 150.

The evaluator component 300 applies a testing algorithm (A) to the output data 160 stored in the lock area 200 against specified conditions and releases the output data 160 to the remaining system and the next function component 120 only if all test conditions are hold as expected. Such a testing algorithm (A) can be stored at the evaluator component 300 or in a computing cloud platform.

According to an aspect of the invention, the resources such as time and memory needed for executing the evaluator component 300 may be reserved. In this case the evaluator component 300 and the executed tests are non-intrusive.

In conventional systems, practical testing and verification approaches operate offline. In contrast, the tests based on the verification system 100 provide for verified data. The tests applied during verification of data can be run and operated online in a running technical field system and enable an early detection of any faults in real system data of any technical system such as state data, signal data, communication data. This allows to prevent errors that, in the worst case, could lead to a failure of the whole integrated technical system. Conceived test cases can never cover all realistic situations in complex, realistic systems so that by the verification approach according to the present invention the operation safety of the integrated system is increased significantly.

In contrast to homogeneous redundancy as used in conventional systems, with the approach according to the present invention operating resources and development efforts are not duplicated. The test conditions are evaluated in addition to the execution of function components 110, 120. The test evaluation can check the outputs of the function components 110, 120 for plausibility. Therefore, redundant implementations of the function components as known in conventional systems are not required. By the test and verification approach according to the present invention, orthogonal testing can be applied before execution of system functions in order to prevent errors and to inhibit propagation of errors or faults to other functional components of the technical system.

A main advantage beyond conventional systems is that errors within a technical system are prevented by the embedded data verification system 100 since data of function components of the system are tested and checked for correctness and plausibility. Consequently, erroneous output data 160 of a function component 110 does not affect other function components 120 of the technical system.

In order to achieve error prevention, conventional solutions rely on modifying a function component itself or in a wrapper that tests the wrapped function component. The proposed solution according to the present invention is orthogonal and independent of the considered function component and thus offers a means to test the function components of the integrated system by applying an online test procedure during operation of the technical system. In this way, the solution according to the invention also facilitates system integration: a function component is checked and its data is verified without having to modify the function component itself. Updated releases of a function component can be integrated in the integrated system as a black box. Even deliveries from 3^{rd} party component suppliers can be subjected to online error checking and prevention.

The error checking and prevention mechanism according to the present invention is conducted by the evaluator component 300 as a generic, separate mechanism which is not necessarily part of specific components, but forms part of the base (runtime) data verification system 100. It can be applied to selected function components 110, 120, e.g. which are critical for the overall integrated technical system. Especially, the tested function components 110, 120 do not need to be modified. Thus, system engineering can focus on the functionality of the whole integrated system. Concerns regarding system goals such as safety requirements are separated because testing and handling of non-functional properties are outsourced to dedicated evaluator components 300, providing test and verification services to the integrated system. As a separated service of the system 100, evaluator components 300 and test functions can be validated separately and independently. Such an independent, modular and separate validation is beneficial in safety relevant use cases.

The present invention comprises a test and verification system 100 and an approach to enforce integrity properties on system data as states, signals, communication at system runtime. Thus, the system behaviour of the integrated technical system comprising the embedded data verification system 100 is enforced to remain within expected constraints and no further test efforts have to be spent to validate that predetermined conditions are met. Repetitious test efforts are reduced applying the test approach according to the present invention in integrated systems that shall be safeguarded against violating aforementioned conditions like safety goals, system and software correctness conditions, and system conditions in general.

Using lock areas 200 in output ports 150 of functional components is a key aspect of the present invention. For a functional component 110, 120, they look like "normal" output ports 150, 152. Other functional components of the technical system do not see their data content but the test evaluator component 300 has access to the computed results captured in the lock areas 200 to check and verify them.

The method according to the present invention can be used to make control systems more robust and reliable. Safety conditions can be checked before failures occur. In particular, the additive extension proposed here allow for integrating the data verification system 100 into an already existing technical system without changing its current "legacy" implementations.

Therefore, the present invention can also help integrating functional components from different internal/external component suppliers into a technical system.

Further, the present invention does reduce resources required for testing because it can run tests during normal operation of the technical system, wherein these tests can be applied to existing, unchanged functional components.

According to the present invention, memory areas are duplicated in function output ports 150, 152, called lock area 200 and release area 400 of function output ports 150, 152. Implementing lock areas 200 and providing an evaluator component 300 is a means of the data verification system 100 and is not restricted to specific components. These technological advancements can be used to check output data of functional components before releasing the data to other functional components of the integrated technical system for further processing.

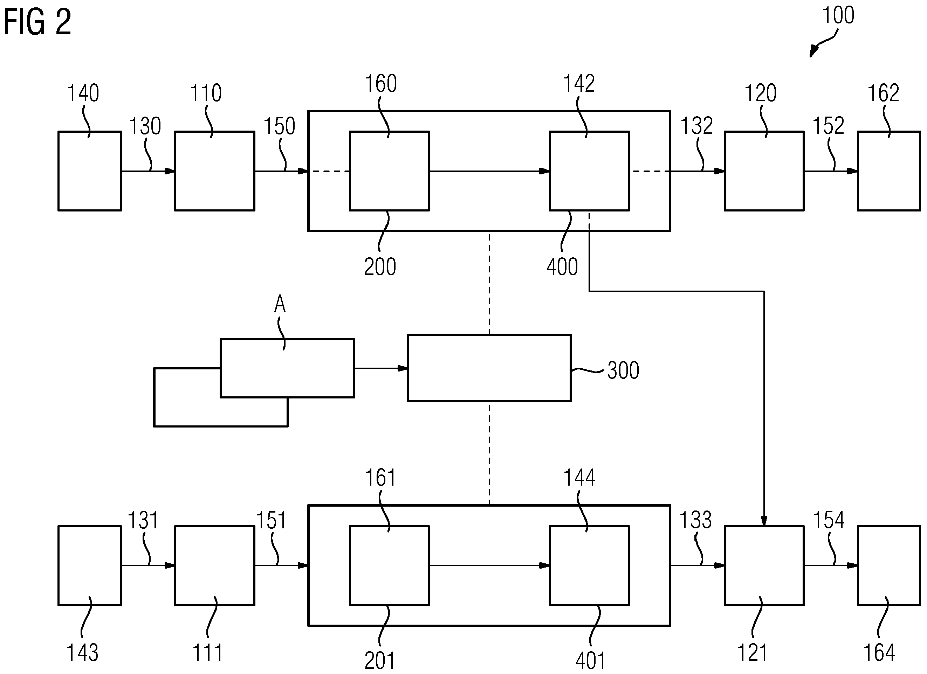

In Fig. 2, an overview of an alternative flow of providing verified data according to a second embodiment of the system 100 is illustrated. In this flow, the output of more than one functional component 110, 111, 120, 121 is combined and checked. That is, the evaluator component 300 reads data values 160, 161 from lock areas 200, 201 of output ports 150, 151 of several function components 110, 111, executes tests and, if the executed tests pass, releases one or more (or all) of the data values 160, 161 captured in the lock areas 200, 201 to the release areas 400, 401. More than one functional component 120, 121 can read the data values 142, 144 in the release areas 400, 401.

A key contribution of the present invention is to facilitate checking of output data 160, 161 of functional components 110, 111 against unwanted network system-level effects. Test functions and the evaluator component 300 do not only check the output data 160, 161 generated by functional components 110, 111, but also the presented effects on the behaviour of the integrated technical system.

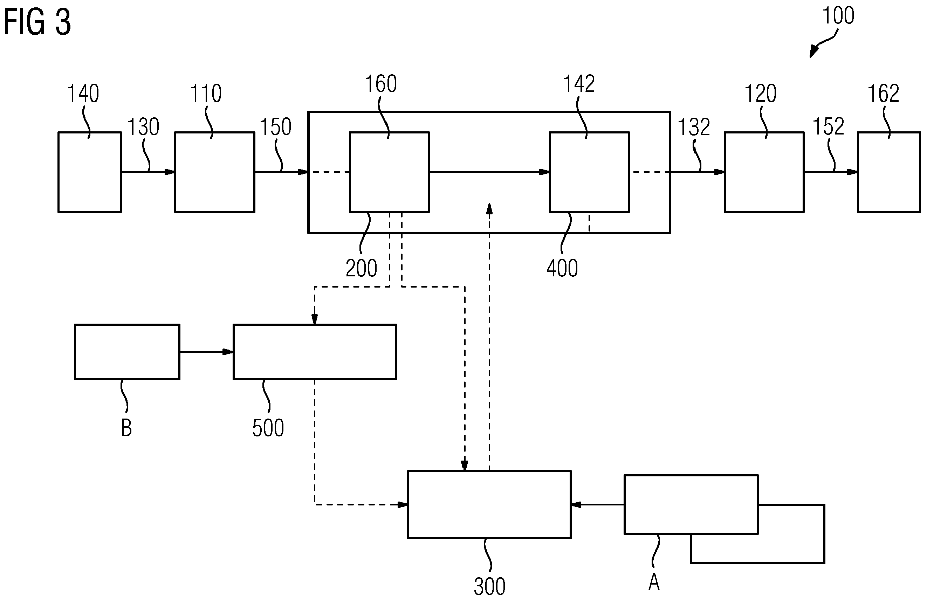

In Fig. 3, an overview of a further alternative flow of providing verified data according to a third embodiment of a system 100 is illustrated. According to the third embodiment, an additional foreboder component 500 is provided. This foreboder component 500 uses a system model for the integrated system and the current system state to project the network system behaviour. It takes data values 160 in lock areas 200 and predicts changes to the overall integrated system once the data values 160 in the lock areas 200 have been released to the whole integrated system. The foreboder component 500 can calculate effects on physical system attributes (e.g. a torque request output will increase the velocity of a mobile system, e.g. a train), or on the behaviour of other functional components (e.g. a terminate command sent to another component would deactivate this other component). The foreboder component 500 calculates its projected or predicted values based on at least one behaviour model of the whole integrated system, which may be created and validated by a system specification or by other computational methods. The projected values of the foreboder component 500 are subject to tests by the evaluator component 300 of the embedded verification system 100 as described above.

As an illustrating example for an application of a processing flow according to the present invention, a door opener in a train is described in the following. The system safety goal for a door opener is defined as: a door shall open if and only if v = 0 (no speed, standstill).
The technical system comprises a functional component that implements the drive-function. The drive-function component calculates torque requests for the engines. In standstill, when the doors of the train are open, an output torque > 0 would lead to an acceleration of the train (system) thus to a violation of the system safety goal.

In a conventional implementation a (software) developer of the drive-function needs to know the system safety goals and the dependencies to the door status. Thus, a drive-function component needs to operate on more input data than necessary for just driving in order to achieve a solution. Functional components, such as the drive-function component, need to deal with the layout of the surrounding system (here: where to retrieve the door status within the train) and the behaviour of the surrounding system, which is not related to their intrinsic responsibility and thus make their construction more complex and costly. A further conventional approach could implement the safety goal as an extra monitoring function, involving dedicated development and test.

With the predictive verification approach according to the present invention, constraints on relations between system data are checked against data values in the lock areas 200. The constraints are part of system configuration, while the foreboder can get a generic implementation, so the previously mentioned monitoring implementation is split in two halves. Only one half, i.e. the constraint configuration, needs to be defined, while the foreboder as second half is already present, tested, and does not need to be developed (for each monitoring function) anew thus reducing development efforts.The constraints are formulated on the system level of the integrated system. Constraints on system level are easier to specify and to evaluate in system safety cases and in certification than constraints on component-level. Data values 160 captured in lock areas 200 are treated as potential, future outputs of a functional component output port 150, which is not yet active. These data values 160 can be processed by the foreboder component 500 of the system 100 as shown in Fig. 3, which uses a system behaviour model for the integrated system and the current system state to project system properties based on the locked output data 160. For example, a torque request > 0 will lead to a higher train velocity v > 0. The predicted train state (v > 0) is also fed as input to the evaluator component 300. The system constraints then fail, because v > 0 with open doors does violate specified safety goals. As a consequence, the evaluator component 300 does not release the output data 160 from the lock area 200, effectively rejecting the torque request and preventing a system failure of the integrated system (train).

Addressing system data such as states, signals, communication on system level simplifies the definition of system tests that catch and prevent failures of system modules or failures of the whole integrated technical system. With the embedded verification mechanism according to the present invention, continuous checking of system constraints gets easier, preventing the late detection of errors, which are costly to repair and potentially disastrous in their effects.

The functional components can comprise electronic components including electronic hardware components adapted to perform different kinds of functions including arithmetic functions or logic operations. The functional components can also comprise software-controlled functions executed by a processor of the functional component. Each functional component comprises at least one input port and at least one output port The functional component comprises further an entity adapted to apply a functional operation on the input data applied to the input port to generate output data output by the release area of the output port after successful data verification to an input port of another functional component.

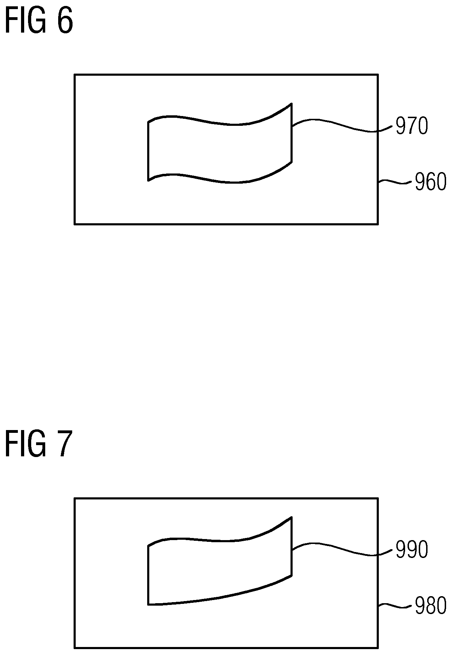

Fig. 6 schematically illustrates a computer program product 960 comprising executable program code 970 configured to, when executed, perform the method according to the second aspect of the present invention, in particular as has been described with respect to Fig. 1 to Fig. 3 and/or Fig. 5.

Fig. 7 schematically illustrates a non-transient computer-readable data storage medium 980 comprising executable program code 990 configured to, when executed, perform the method according to the second aspect of the present invention, in particular as has been described with respect to Fig. 1 to Fig. 3 and/or Fig. 5.

## Claims

1. A system (100) for verification of data processed in a technical system comprising
at least one functional component (110) having at least one output port (150) including a lock area (200) and a release area (400), wherein the lock area (200) of the output port (150) of the functional component (110) is configured to store output data (160) of said functional component (110), wherein an evaluator component (300) is configured to process and verify the output data (160) stored in said lock area (200) by performing a test using a testing algorithm (A), wherein in case of a positive test result of the performed test the evaluator component (300) is configured to release the output data (160) to the release area (400) of the output port (150) of the functional component (110) for further processing.

2. The system as claimed in claim 1, wherein the release area (400) of the output port (150) of the functional component (110) is configured to provide data to the input port (132) for a subsequent functional component (120) of the technical system.

3. The system as claimed in claim 1 or 2, wherein an input port (130) is configured to provide input data (140) to the functional component (110) of the technical system.

4. The system of claim 3, wherein the functional component (110) of the technical system is configured to generate output data (160) output via its output port (150) based on the input data (140) applied to its input port.

5. The system as claimed in any one of claims 1 to 4, wherein in case of a negative test result of the performed test the evaluator component (300) is configured to lock the output data (160) in the lock area (200) of the output port (150) and to remain the previous data (142) in the release area (400) of the output port (150) active.

6. The system as claimed in any one of claims 1 to 5, wherein the evaluator component (300) is configured in such a way that the output data (160) captured in the lock area (200) of the output port (150) are only visible for the evaluator component (300).

7. The system as claimed in any one of claims 1 to 6, wherein the evaluator component (300) is configured to test and/or verify the output data (161) of further function components (111) of the technical system.

8. The system as claimed in any one of claims 1 to 7, wherein the testing algorithm (A) is configured to be stored in a memory of the evaluator component (300) and/or in a cloud computing platform.

9. The system as claimed in any one of claims 1 to 8, wherein several functional components (110, 111, 120, 121) of the technical system are connected in an integrated network system.

10. The system as claimed in any one of claims 1 to 8 comprising a foreboder component (500) adapted to calculate the behavior of the technical system and/or its functional components (110, 120).

11. The system as claimed in claim 10, wherein the calculation performed by the foreboder component (500) is based on a computational model of the technical system and/or its functional components (110, 120), wherein the calculation results can serve as additional input for the tests by the evaluation component (300).

12. A method for verification of data processed in a technical system comprising one or more functional components (110, 120) comprising the steps of:
storing (S30) output data (160) output by an output port (150) of a first functional component (110) of said technical system in a lock area (200) of said output port (150);
testing (S40) the output data (160) stored in the lock area (200) of the output port (150) by a testing algorithm (A) executed on an evaluator component (300);
releasing (S60) by the evaluator component (300) in case of a positive test result the output data (160) stored in the lock area (200) of the output port (150) to a release area (400) of the output port (150).

13. A functional component (110, 111, 120, 121) configured for use in a system (100) as claimed in any one of claims 1 to 11 and/or a method as claimed in claim 12, wherein the functional component comprises at least one input port and at least one output port including a lock area (200) and a release area (400).

14. A computing platform configured for use by the system (100) as claimed in any one of claims 1 to 11.

15. A computer program product (960) comprising executable program code (970) configured to, when executed, perform the method according to claim 12.
